# NOUVEAU FASCICULE DE BREVET EUROPEEN

(11) **EP 0 216 692 B2**
(45) Date de publication et mention de la décision concernant l'opposition: **30.03.1994**
(45) Mention de la délivrance du brevet: 08.05.1991
(21) Numéro de dépôt: 86401976.5
(22) Date de dépôt: 10.09.1986
(51) Int. Cl.: G02B 5/32, G02B 27/00, B60J 1/02

(54) **Pare-brise ayant une direction de réflexion privilégiée pour réfléchir les signaux optiques dans le champ de vision du conducteur**
Windschutzscheibe mit einem speziellen Richtungsreflektor um optische Signale in das Gesichtsfeld des Fahrers zu bringen
Windscreen having a particular reflection direction to reflect optical signals into the field of vision of the driver

(30) Priorité: 10.09.1985 DE 3532120
(43) Date de publication de la demande: 01.04.1987
(73) Titulaire: SAINT-GOBAIN VITRAGE INTERNATIONAL, 92400 Courbevoie (FR); VEGLA Vereinigte Glaswerke GmbH, D-52066 Aachen (DE); Volkswagen Aktiengesellschaft, 38436 Wolfsburg (DE)
(72) Inventeur: Felske, Armin, D-3180 Wolsburg 12 (DE); Stoffregen, Bernd, D-3300 Braunschweig (DE); Beeck, Manfred-Andreas, D-3170 Gifhorn (DE); Sauer, Gerd, D-5190 Stolberg Venwegen (DE); Hassiepen, Michael, D-5100 Aachen (DE); Rebenstorff, Detlev, 5100 Aachen (DE)
(74) Mandataire: Leconte, Jean-Gérard

(56) Documents cités:
- EP-A- 0 104 114
- DE-A- 3 136 946
- DE-A- 3 347 271
- DE-A- 3 523 032
- GB-A- 1 040 518
- GB-A- 1 418 891
- GB-A- 1 505 873
- GB-A- 2 009 960
- GB-A- 2 054 195
- GB-A- 2 145 535
- GB-A- 2 161 615
- GB-B- 2 042 206
- GB-B- 2 132 376
- US-A- 3 887 273
- US-A- 3 915 548
- US-A- 3 940 204
- US-A- 3 949 490
- US-A- 4 315 665
- US-A- 4 384 759
- "Holographic Optical Elements" by D.H. Close in Optical Engineering, no. 14, 1975.
- Article by Chang in Optical Engineering, vol. 19, no. 5, Sept./Oct. 1980.
- Optics LETTERS, vol. 10, no. 6, juin 1985, pp 303-305, Optical Society of America, New York, US, D.J. McCARTNEY et al.: "Position-tunable holographic filters in dichromated gelatin for use in single-mode-fiber demultiplexers"

## Description

La présente invention concerne un système de vision du type "tête haute" tel que défini dans le préambule de la revendication 1.

Un tel système de vision est connu du brevet US-A-3915548, incorporé dans un pare-brise d'avions.

Dans le cas de pare-brise avec un système de type "tête-haute", des signaux d'information ou d'avertissement importants peuvent être perçus par le conducteur sans qu'il doive à cet effet quitter du regard le trafic en mouvement devant lui. Les éléments optiques transmettant les signaux ou les informations optiques sont, dans ce cas, installés en règle générale dans le tableau de bord. Dans le cas des pare-brise de ce type connu, le dispositif réfléchissant est une couche métallique mince semi-transparente qui doit offrir une transmission suffisante pour garantir, même dans la zone de cette couche, la vision par transparence nécessaire.

Les signaux ou informations optiques ne sont pas réfléchis comme tels uniquement par la couche semi-transparente, mais aussi par les interfaces verre-air ou verre-couche de matière plastique. Ces réflexions indésirables aboutissent à la formation d'images doubles qui perturbent l'observation d'autant plus que, d'une part, la lumière primaire réfléchie est relativement faible et, d'autre part, la lumière parasite frappant le tableau de bord dans les directions les plus diverses est également réfléchie et forme en même temps un fond perturbateur sur lequel les signaux utiles relativement faibles ne se distinguent que faiblement.

Pour exclure ces images doubles gênantes, il est connu de choisir l'agencement géométrique d'une manière telle que l'angle d'incidence des rayons lumineux provenant des générateurs de signaux soit de l'ordre de grandeur de l'angle de Brewster et d'installer dans le trajet des rayons de l'image à observer un filtre de polarisation qui efface les rayons lumineux parasites réfléchis par les surfaces de verre (brevet allemand 24 50 704). Dans cet agencement connu, les images doubles perturbatrices sont certes supprimées, mais tous les inconvénients ne sont pas pour autant évités. A titre d'inconvénient, on peut citer le fait que l'angle de projection prédéfini impose un agencement géométrique déterminé du pare-brise et/ou du dispositif de projection. De plus, un autre inconvénient réside dans le fait que la couche semi-réfléchissante se comporte de l'extérieur comme une surface de miroir fortement réfléchissante en particulier en cas d'ensoleillement et peut provoquer des éblouissements indésirables. De plus, l'image des signaux reflétés sur le miroir dépend forcément toujours de la planimétrie de la surface de miroir et, étant donné que les pare-brise ne sont en règle générale pas plans, mais cintrés, il est dans ce cas inévitable que l'image dans le miroir soit restituée avec une déformation correspondante. Toutefois, un inconvénient particulier est constitué par le fait qu'à cause de la transparence nécessaire de la couche semi-réfléchissante, seule une fraction relativement faible de la lumière projetée sur cette couche est réfléchie de sorte que, selon la luminosité ambiante, le signal apparaissant dans le pare-brise est relativement faible.

L'invention a pour but d'agencer un pare-brise du type spécifié comportant un dispositif réfléchissant dans son champ de visibilité d'une manière telle que l'on obtienne une réflexion plus intense des signaux utiles tout en supprimant la réflexion de la lumière parasite.

L'utilisation d'hologrammes pour réfléchir partiellement la lumière est connue. Le brevet US 4 315 665 en particulier, propose d'introduire entre deux plaques de verre une couche support d'un hologramme, de manière à permettre le vision directe tout en donnant un aspect décoratif au verre vu de l'autre côté. L'hologramme est utilisé dans ce cas comme support de l'information qu'on désire stocker (en l'occurrence, une image virtuelle ou un aspect coloré) mais non comme miroir participant à la formation d'images comme un miroir traditionnel.

Dans le brevet européen EP 0 104 114 A3, en revanche, un miroir holographique plan sur un support plan est utilisé comme dispositif semi-réfléchissant permettant la visée tête haute dans des viseurs goniométriques. L'installation d'un tel dispositif sur une automobile entre le pare-brise et l'oeil du conducteur serait possible mais les inconvénients en seraient bien supérieurs aux avantages. Un tel miroir présente les mêmes inconvénients qu'un miroir à couche métallique semi-réfléchissante tout en étant beaucoup plus compliqué à fabriquer. Le seul avantage par rapport à la couche métallique portée par le pare-brise lui-même est dans l'absence d'aberrations liées à la forme de la surface réfléchissante.

L'invention se propose d'avoir la même qualité de réflexion sans avoir les inconvénients d'un dispositif supplémentaire à installer devant le conducteur.

Conformément à la partie caractéristique de la revendication 1, l'invention se caractérise en ce que le pare-brise est un pare-brise d'automobile, bombé, de sorte que l'hologramme supporté par ce dernier revêt la même forme bombée et en ce que l'hologramme est conçu de façon à produire dans ladite forme bombée l'effet d'un miroir plan.

L'invention propose donc un système de vision du type "tête haute" destiné à équiper un pare-brise courbe d'automobile, comportant un miroir holographique qui permet l'apparition dans le champ de vision du conducteur de signaux supportant des informations visuelles et dans lequel c'est le pare-brise lui-même qui est le support holographique.

L'hologramme de réflexion peut être disposée entre les deux feuilles de verre silicaté d'un vitrage feuilleté ou au contraire sur la surface interne du pare-brise. Dans ce dernier cas, elle est avantageusement recouverte d'une couche de protection adéquate.

Selon l'invention, l'hologramme de volume jouant le rôle d'un miroir plan est disposé sur une couche de support courbée d'une maniéré correspondant à la forme du pare-brise. De cette façon, même dans le cas de pare-brise cintrés, les signaux optiques et les informations donnent une image réfléchie qui ne présente aucune aberration optique.

Toujours selon l'invention, des hologrammes de réflexion sont développés et sont utilisés dans le pare-brise, la surface de miroir plan formée par voie holographique présentant, dans le cas de cet hologramme, une autre inclinaison dans l'espace que le pare-brise lui-même. De cette façon, indépendamment des conditions géométriques du véhicule automobile et de l'inclinaison prédéfinie du pare-brise, l'hologramme de réflexion peut être agencé d'une manière telle que la surface réfléchissante présente son inclinaison optimale. De plus, par le fait que l'angle de réflexion de l'hologramme est différent de l'angle de réflexion du pare-brise, il est possible d'exclure de manière simple les images doubles, qui sont dues à une réflexion au niveau des surfaces de verre.

Il est encore possible, selon l'invention, d'élaborer des hologrammes de réflexion qui ne réfléchissent que des longueurs d'onde sélectionnées. De cette façon, par exemple, dans le cas d'une longueur d'onde adéquate des signaux lumineux projetés, ceux-ci soient réfléchis à 80% ou davantage sous l'angle d'observation, tandis que l'hologramme présente une transparence élevée à l'égard de toutes les autres longueurs d'onde. Dans le cas d'une diminution simultanée d'une réflexion parasite, l'efficacité est considérablement améliorée en ce qui concerne la réflexion des informations optiques.

Il est, en outre, possible de réaliser l'hologramme de réflexion d'une manière telle que les signaux et les informations optiques reflétés dans le champ de vision du conducteur soient présents de manière nette par l'hologramme lui-même à une plus grande distance en avant du véhicule de telle façon que pour le conducteur, l'image de la chaussée qui se trouve devant lui, combinée avec les signaux optiques, apparaisse à l'infini et que de cette façon l'oeil voie de manière nette simultanément le trafic et les signaux optiques.

Dans le cas de l'affichage de surfaces reflétées dans un hologramme, le miroir virtuel est créé par l'affichage d'une structure de réseau ordonnée pendant le processus de développement selon un processus d'éclairage adéquat. Un hologramme présentant une telle structure du réseau est également qualifié d'hologramme en volume. Un hologramme en volume de ce type présente contrairement à un hologramme superficiel, pour chaque surface reflétée affichée, un angle de réflexion optimum avec une couleur de réflexion optimale. L'angle de réflexion de même que la couleur de réflexion peuvent être régis par l'éclairage de même que par le processus de développement.

Dans le cas du montage conforme à l'invention d'un hologramme de réflexion dans le pare-brise, l'angle de projection de même que l'angle d'observation ainsi que la longueur d'onde doivent être choisis correctement. Ce n'est que lorsque ces trois conditions sont toutes simultanément remplies que les signaux ou les informations deviennent visibles pour l'observateur.

L'invention peut aussi être réalisée de telle façon que dans l'hologramme lui-même soit présente l'image virtuelle d'un signal ou d'un symbole qui réfléchit une longueur d'onde déterminée de la lumière, et que, lors d'un éclairage à l'aide d'une lumière de préférence monochromatique de cette longueur d'onde, cette lumière soit réfléchie et devienne ainsi visible pour le conducteur. Dans un développement de cette forme d'exécution, on peut disposer des hologrammes de réflexion avec divers signaux ou symboles dans le pare-brise et ces hologrammes réfléchissent chaque fois une autre longueur d'onde ou présentent les angles de réflexion différents. En éclairant ces hologrammes au moyen de lumière monochromatique de diverses longueurs d'onde, qui est chaque fois accordée sur l'hologramme d'un des signaux ou en éclairant sous divers angles de projection, on peut allumer sélectivement certains de ces divers signaux. Un agencement de ce type convient, par exemple, pour afficher des signaux d'avertissement se rapportant au trafic ou des symboles dans le pare-brise.

D'autres particularités et avantages de l'invention ressortiront des revendications et de la description suivante d'une forme d'exécution préférée, donnée à titre d'exemple avec référence aux dessins annexés, dans lesquels :
la Fig. 1 est une vue en coupe verticale schématique d'un pare-brise conforme à l'invention à l'état monté avec un dispositif pour projeter des signaux optiques sur le pare-brise;
la Fig. 2 illustre un pare-brise conforme à l'invention en verre de sécurité feuilleté comportant un hologramme de réflexion disposé entre les deux feuilles de verre du vitrage feuilleté ;
la Fig. 3 illustre un pare-brise en verre de sécurité feuilleté comportant un hologramme de réflexion disposé sur la surface du vitrage tournée vers l'habitacle;
la Fig. 4 illustre un pare-brise conforme à l'invention comportant un hologramme multiple contenant divers symboles et pour lequel les signaux individuels sont allumés sélectivement par modification de l'angle d'éclairage, et
la Fig. 5 illustre un pare-brise conforme à l'invention comportant un hologramme multiple contenant divers symboles et pour lequel les symboles individuels sont allumés sélectivement par sélection de la couleur des rayons d'éclairage.

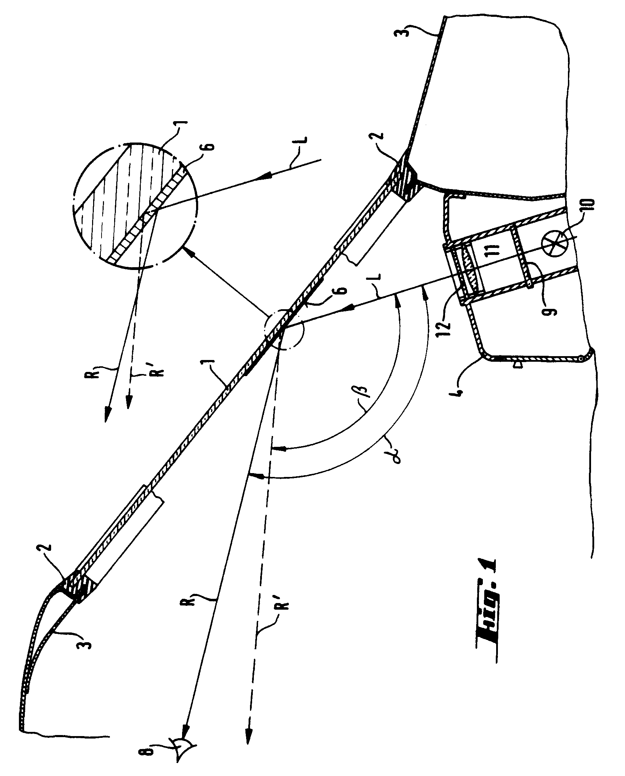

Le pare-brise 1 illustré sur la Fig. 1 est représenté comme une feuille de verre monolithique, mais il va de soi que le pare-brise peut être essentiellement de n'importe quelle structure et doit présenter les propriétés exigées du verre de sécurité. Il est fixé à la carrosserie 3 du véhicule à l'aide d'un encadrement en caoutchouc périphérique 2. En dessous du pare-brise 1 se trouve le tableau de bord 4 dans lequel un générateur de signaux optiques est monté d'une manière telle que les rayons lumineux L provenant du générateur de signaux soient réfléchis par l'hologramme de réflexion 6 et d'une manière telle que les rayons lumineux réfléchis R soient perçus par les yeux 8 du conducteur. La surface de miroir formée dans l'hologramme de réflexion 6 présente une autre inclinaison dans l'espace que le pare-brise 1. L'angle de réflexion α de l'hologramme de réflexion est de ce fait supérieur à l'angle de réflexion β imposé par les surfaces du pare-brise et les rayons lumineux R' du signal réfléchi par les surfaces du pare-brise ne parviennent par conséquent pas aux yeux 8 du conducteur de sorte que ce dernier ne perçoit pas d'image double parasite du signal.

Les signaux d'information optiques qui sont réfléchis dans le champ de vision du conducteur peuvent comprendre des signaux ou des informations les plus diverses. Par exemple, il peut s'agir de signaux d'avertissement qui apparaissent dans des situations déterminées. Ces signaux d'avertissement peuvent être formés par des diodes électroluminescentes ou par un support d'information transparent traversé par les rayons d'une source lumineuse comme, par exemple, une diapositive. D'une manière analogue, les informations optiques peuvent comprendre des indications de grandeurs qui se modifient comme, par exemple, la vitesse du véhicule, la distance séparant le véhicule du véhicule précédent ou des grandeurs se rapportant à l'état de marche du véhicule qui sont affichées au moyen d'un affichage à cristaux liquides ou d'une matrice de diodes électroluminescentes.

Dans l'exemple illustré sur la Fig. 1, le signal d'avertissement à projeter se présente sous la forme d'une diapositive qui est éclairée en transparence par une source lumineuse (10). Devant la diapositive 9 est prévue une lentille 11 de grand diamètre, la diapositive 9 étant disposée au voisinage du point focal de la lentille 11. Dans l'exemple représenté, en lieu et place de la diapositive éclairée par transparence 9, on peut aussi utiliser des dessins éclairés par le haut ou des affichages autolumineux qui peuvent être réalisés sous une forme numérique ou analogique par la technique des diodes életroluminescentes ou des cristaux liquides. Par suite de l'effet de loupe de la lentille 11, ces informations sont vues par le conducteur en des dimensions agrandies de manière correspondante. Devant la lentille 11 est prévu un disque de protection transparent 12. Selon l'ajustement de la lentille 11, le dispositif optique peut être réglé d'une manière telle que les signaux soient perçus par le conducteur à une distance finie souhaitée ou à l'infini.

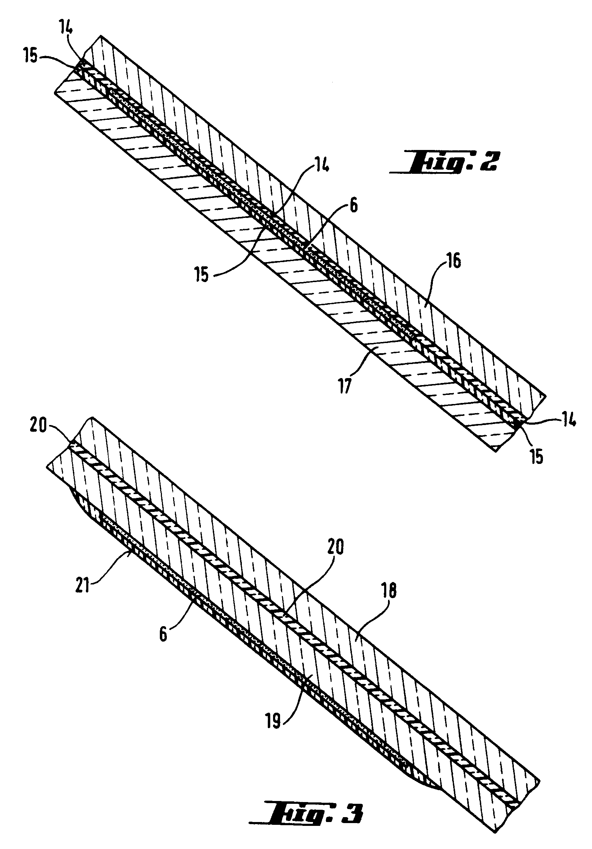

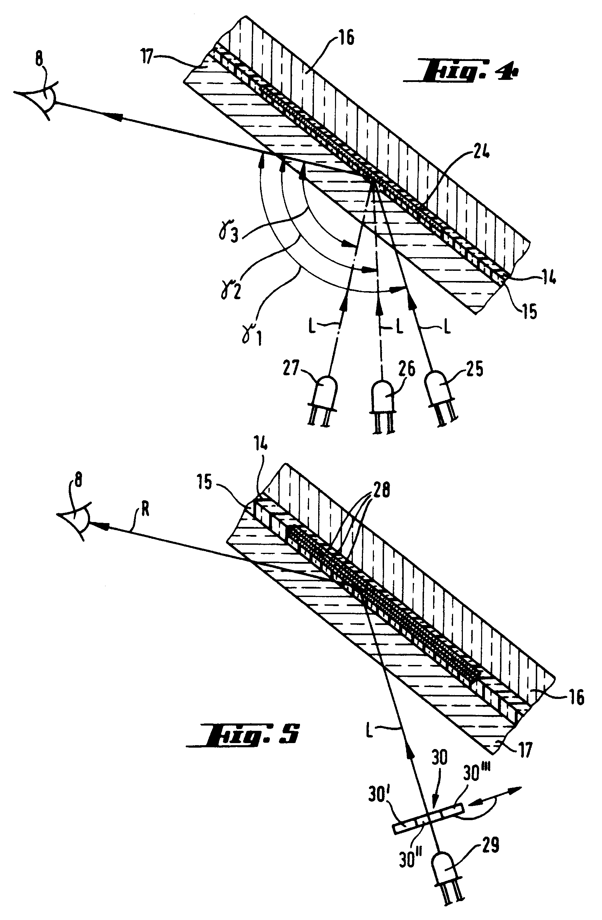

La couche contenant l'hologramme de réflexion 6 est, comme le montre la Fig. 2, avantageusement disposée entre deux couches d'adhésif thermoplastique 14, 15 qui unissent les deux feuilles de verre silicaté 16, 17 en un vitrage feuilleté de sécurité. En variante, l'hologramme de réflexion 6 peut cependant aussi, comme le montre la Fig. 3, être disposé sur la surface de la feuille de verre 19 tournée vers l'habitacle, cette feuille de verre étant unie à une seconde feuille de verre 18 au moyen d'une couche intermédiaire en matière thermoplastique 20 pour former un vitrage feuilleté de sécurité. L'hologramme 6 est recouvert d'une pellicule de protection transparente 21.

Pour confectionner les hologrammes de réflexion, on a recours au procédé connu à cet effet selon lequel des couches sensibilisées par du dichromate d'ammonium sont avantageusement utilisées comme support de l'hologramme. Un aperçu du procédé connu pour la confection d'hologrammes adéquats peut être obtenu par exemple dans la revue "Topics in Applied Physics", volume 20, 1977.

Les propriétés souhaitées de l'hologramme de réflexion peuvent être obtenues par des moyens adéquats lors de l'enregistrement de l'hologramme. Ainsi, par exemple, on peut obtenir le caractère d'une surface réfléchissante en holographiant un miroir superficiel au moyen d'un dispositif à laser adéquat. Le réseau de diffraction qui se forme dans la couche de gélatine se comporte alors comme un miroir sélectif qui, lors d'une projection sous un angle de projection déterminé, réfléchit une longueur d'onde souhaitée de la lumière presque jusqu'à 100%, tandis que l'hologramme est entièrement transparent à l'égard d'une lumière de la longueur d'onde sélectionnée arrivant sous un autre angle.

Lorsqu'un hologramme de réflexion ayant la caractéristique d'un miroir plan doit être confectionné pour un pare-brise bombé, on peut, par exemple, faire en sorte que, pendant la représentation holographique d'un miroir plan, le substrat portant la couche photo-sensible soit bombé de telle sorte que le rayon de courbure de la couche contenant l'hologramme corresponde au rayon de courbure du pare-brise. A cet effet, par exemple une pellicule transparente recouverte de gélatine dichromatée est insérée entre deux feuilles de verre bombées d'une manière correspondant au bombage des pare-brise et les feuilles de verre sont pressées l'une contre l'autre. Dans cet état déformé, l'image du miroir plan est formée à l'aide d'un dispositif d'éclairage à laser.

Des hologrammes de réflexion peuvent, comme mentionné plus haut, posséder en plus de leurs caractéristiques de miroir, une sorte de caractéristique de filtrage, c'est-à-dire qu'ils réfléchissent presque complètement une longueur d'onde déterminée que l'on peut établir par l'opération de développement de l'hologramme, tandis que pour les autres longueurs d'onde, ils sont largement transparents. Cet effet peut être utilisé pour améliorer le pouvoir de reconnaissance de signaux, à condition d'adapter la couleur du générateur de signaux à cette longueur d'onde de réflexion optimale.

Sur les Fig. 4 et 5 sont représentés deux exemples de réalisation de l'invention dans lesquels l'hologramme lui-même contient l'image virtuelle de plusieurs symboles qui sont illuminés sélectivement.

Dans le cas du pare-brise représenté sur la Fig. 4, l'hologramme 24 est à nouveau disposé entre les deux couches d'adhésif thermoplastique 14, 15 d'un vitrage feuilleté qui unissent les deux feuilles de verre silicaté 16, 17 l'une à l'autre. Dans l'hologramme 24 se trouvent les images virtuelles de divers symboles qui se distinguent les uns des autres par des angles de réflexion γ₁, γ₂ et γ₃ différents. Les symboles peuvent être constitués par exemple par des pictogrammes tels qu'ils sont courants dans des véhicules automobiles pour l'affichage de divers états de fonctionnement ou de danger. Pour un angle d'observation donné, le symbole éclairé sous l'angle correct apparaît aux yeux du conducteur. Dans le cas représenté, la mise sous tension de la diode électroluminescente 25 affiche le symbole de l'hologramme qui correspond à l'angle de réflexion γ₁. Lors de la mise sous tension de la diode électroluminescente 26, un autre symbole dans l'hologramme 24 est éclairé et, en particulier, le symbole dont l'angle de réflexion optimum est égal à γ₂, tandis que la mise sous tension de la diode électroluminescente 27 éclaire le symbole qui correspond à l'angle de réflexion γ₃. Le symbole souhaité peut aussi être éclairé par une modification de l'angle d'éclairement. La couleur de la source lumineuse est dans ce cas réglée sur la longueur d'onde de la réflexion optimale. On peut de cette façon resteindre l'angle de sélection et atténuer plus fortement les autres symboles. Pour la sélection des symboles, on peut soit faire pivoter la source lumineuse, soit, comme le montre la Fig. 4, installer à demeure une série de diodes électroluminescentes sous des angles différents et les allumer sélectivement.

Dans l'exemple de réalisation représenté sur la Fig. 5, l'hologramme 28 contient également les divers symboles des images virtuelles qui sont allumés sélectivement. Dans ce cas, l'hologramme 28 est un hologramme à plusieurs couches dans lequel dans plusieurs couches sont disposés des hologrammes superposés qui réfléchissent des longueurs d'onde différentes, tandis que l'angle de réflexion est le même pour tous les symboles. L'éclairage de l'hologramme s'effectue, par conséquent. par l'intermédiaire d'une source lumineuse 29 sous le même angle d'incidence. Dans ce cas, la sélection du symbole souhaité s'effectue par le choix de la longueur d'onde correspondante, ce qui peut être réalisé, par exemple, par un déplacement du filtre de couleur 30 disposé devant la source lumineuse 29 dans le sens de la double flèche F. Le filtre de couleur 30 présente trois zones de filtrage différentes 30', 30'' et 30''' disposées les unes à côtés des autres, la couleur de ces zones de filtrage étant chaque fois accordée à l'hologramme associé.

Dans l'exemple de réalisation représenté, le miroir holographique est disposé devant l'oeil du conducteur dans la zone centrale du pare-brise. Etant donné cependant qu'il en résulte dans chaque cas une certaine diminution de la transparence dans la zone de l'hologramme, il peut être avantageux de disposer le miroir holographique et ainsi le champ d'affichage dans la zone inférieure du pare-brise qui n'est pas utilisée directement pour la surveillance du trafic routier.

Tous les exemples qui précèdent supposent que la direction du regard qui voit l'hologramme 6, 24, 28 reste sensiblement la même quel que soit l'observateur. L'invention nécessite par conséquent qu'un système mécanique associé au siège du conducteur permette à son oeil de se retrouver sensiblement sur la même ligne quelle que soit sa morphologie.

## Revendications

1. Système de vision du type "tête haute" incorporé dans un véhicule comportant un pare-brise (1), ledit système comprenant un hologramme (6, 24, 28) supporté par ledit pare-brise en épousant la forme de ce dernier, ledit hologramme agissant comme un miroir pour faire apparaître dans le champ de vision du conducteur des signaux issus de supports d'informations visuelles, l'angle de réflexion de l'hologramme étant différent de l'angle de réflexion du pare-brise, et l'hologramme ne réfléchissant qu'une ou plusieurs longueurs d'onde sélectionnées provenant chacune d'un desdits supports d'informations visuelles,
caractérisé par la combinaison des caractéristiques suivantes:
- le pare-brise est un pare-brise automobile;
- le pare-brise est bombé, de sorte que l'hologramme supporté par ce dernier revêt la même forme bombée; et
- l'hologramme est conçu de façon à produire, dans ladite forme bombée, l'effet d'un miroir plan.

2. Système de vision du type "tête haute" selon la revendication 1 caractérisé en ce que l'hologramme comporte de plus une ou plusieurs images inscrites dans l'hologramme (6,24,28).

3. Système de vision du type "tête haute" selon la revendication 2 caractérisé en ce que l'hologramme (28) est un hologramme en volume conçu de façon à ce que lesdites images inscrites apparaissent lorsqu'elles sont éclairées chacune par une longueur d'onde différente.

4. Système de vision du type "tête haute" selon la revendication 2 caractérisé en ce que l'hologramme (24) est un hologramme en volume conçu de façon à ce que lesdites images inscrites apparaissent lorsqu'elles sont éclairées chacune sous une incidence différente (γ₁, γ₂, γ₃).

5. Système de vision du type "tête haute" selon l'une des revendications 1 à 4 caractérisé en ce que l'hologramme (6,24,28) est conçu de façon à réfléchir des rayons formant une image mise au point par l'intermédiaire d'une optique de projection (11).

6. Système de vision du type "tête haute" selon la revendication 5 caractérisé en ce que la mise au point s'effectue à une distance finie souhaitée.

## Patentansprüche

1. Optisches System vom Typ "head-up" in einem eine Windschutzscheibe (1) aufweisenden Fahrzeug, wobei das System ein von der Windschutzscheibe getragenes, sich der Form der Windschutzscheibe anpassendes, als Spiegel wirkendes und von Trägern sichtbarer Informationen ausgehende Signale im Sichtfeld des Fahrers wiedergebendes Hologramm (6,24,28) umfaßt, dessen Reflexionswinkel von dem Reflexionswinkel der Windschutzscheibe verschieden ist und das nur eine oder mehrere jeweils von einem der Träger der sichtbaren Informationen ausgehende ausgewählte Wellenlängen reflektiert,
gekennzeichnet durch die Kombination der folgenden Merkmale:
- die Windschutzscheibe ist eine Kraftfahrzeugwindschutzscheibe,
- die Windschutzscheibe ist gebogen, so daß das von ihr getragene Hologramm dieselbe gebogene Form annimmt, und
- das Hologramm ist derart ausgebildet, daß es in der gebogenen Form die Wirkung eines ebenen Spiegels ausübt.

2. Optisches System vom Typ "head-up" nach Anspruch 1, dadurch gekennzeichnet, daß das Hologramm zusätzlich ein oder mehrere in dem Hologramm (6,24,28) enthaltende Bilder umfaßt.

3. Optisches System vom Typ "head-up" nach Anspruch 2, dadurch gekennzeichnet, daß das Hologramm (28) ein Volumenhologramm ist, das derart ausgebildet ist, daß die in ihm enthaltenen Bilder sichtbar werden, wenn sie jeweils mit einer anderen Wellenlänge beleuchtet werden.

4. Optisches System vom Typ "head-up" nach Anspruch 2, dadurch gekennzeichnet, daß das Hologramm (24) ein Volumenhologramm ist, das derart ausgebildet ist, daß die in ihm enthaltenen Bilder sichtbar werden, wenn sie jeweils unter einem anderen Einfallswinkel (γ₁, γ₂, γ₃) beleuchtet werden.

5. Optisches System vom Typ "head-up" nach einem der Ansprüche 1 bis 4, dadurch gekennzeichnet, daß das Hologramm (6,24,28) derart ausgebildet ist, daß es Strahlen reflektiert, die ein von einer zwischengeschalteten Projektionsoptik (11) geliefertes Bild erzeugen.

6. Optisches System vom Typ "head-up" nach Anspruch 5, dadurch gekennzeichnet, daß das Bild in einem gewünschten endlichen Abstand erzeugt wird.

## Claims

1. Viewing system of the "head up" type, incorporated in a vehicle comprising a windscreen (1), said system comprising a hologram (6, 24, 28) supported by said windscreen and exactly corresponding to the shape of the latter, said hologram acting as a mirror to cause the appearance, within the field of view of the driver, of signals emitted by visual information carriers, the angle of reflection of the hologram being different from the angle of reflection of the windscreen, and the hologram reflecting only one or several selected wavelengths each originating from one of said visual information carriers, characterized by the combination of the following characteristics:
- the windscreen is an automobile windscreen,
- the windscreen is curved, so that the hologram supported by the windscreen follows the same curved form, and
- the hologram is designed in such a way as to produce, in said curved shape, the effect of a plane mirror.

2. Viewing system of the "head up" type according to Claim 1, characterized in that the hologram comprises, in addition, one or more images inscribed in the hologram (6, 24, 28).

3. Viewing system of the "head up" type according to Claim 2, characterized in that the hologram (28) is a volumetric hologram designed in such a way that said inscribed images appear when they are illuminated each by a different wavelength.

4. Viewing system of the "head up" type according to Claim 2, characterized in that the hologram (24) is a volumetric hologram designed in such a way that said inscribed images appear when they are illuminated, each at a different angle of incidence (γ₁, γ₂, γ₃).

5. Viewing system of the "head up" type according to one of Claims 1 to 4, characterized in that the hologram (6, 24, 28) is designed so as to reflect rays forming an image focussed by means of a projection optic (11).

6. Viewing system of the "head up" type according to Claim 5, characterized in that the focussing takes place at a desired finite distance.
